# EUROPEAN PATENT SPECIFICATION

(11) **EP 1 955 872 B1**
(45) Date of publication and mention of the grant of the patent: **28.04.2010**
(21) Application number: 07101808.9
(22) Date of filing: 06.02.2007
(51) Int. Cl.: B60B 1/00, B60B 1/04, B60B 21/06

(54) **Spoke**
Speiche
Rayon

(43) Date of publication of application: 13.08.2008
(73) Proprietor: Holland Mechanics BV, 1440 AJ Purmerend (NL)
(72) Inventor: Cruyff, Marcel, 1127PH, Den Ilp (NL)
(74) Representative: Uittenbogaart, Gustaaf Adolf

(56) References cited:
- EP-A- 0 794 071
- EP-A- 1 559 581
- EP-A- 1 724 122
- US-A- 3 894 777

## Description

The invention concerns a spoke in accordance with the preamble of claim 1. Spokes of this type are known. The spokes are made by using a straightened wire and making the first end by pressing the head on the end of the wire and then bending a neck near the head, which neck can be hooked in a hole of the hub, or shaping the first end in any other way so that it can be fastened in the hub. The second end is provided with the screw thread by rolling it on the wire which causes the diameter to increase slightly due to the forcing of the thread in the wire. For tensioning the spokes in the wheel, the second end of the spoke is inserted in a hole in the rim of the wheel and the nipple is screwed on the screw thread until there is sufficient tension in the spoke. Due to the tension in the spoke and the friction between the spoke and the nipple the nipple exerts during screwing a considerable torque on the spoke. In recent constructions, the friction is further increased by the use of a compound between the screw threads of nipple and spoke, which compound will prevent coming loose of the nipple during use of the wheel. Such a spoke is known from EP-A-0 794 071.

In order to prevent rotation of the spoke in general the first head is coupled to the hub in such a way that blocks rotation of the spoke, however undesirable deformation or twist of the shaft might occur as a result of the torque during tensioning of the spoke. In order to prevent this deformation or twist during screwing the nipple on the spoke the shaft and in the situation where there is no blocking of rotation of the spoke in the hub, the spoke can be clamped in a spanner or a similar clamping tool.

The disadvantage of the prior art is that clamping tools have to grip the spoke very strongly in order to prevent rotation and thereby may damage the spoke. This can lead to deformation and/or corrosion and thereby still does not ensure preventing twist in the shaft of the spoke.

In order to overcome this disadvantage the spoke is in accordance with claim 1. The square cross-section makes it possible to clamp and position the spoke in a rotation position in one action with a limited force, which makes assembling the wheel in a proper way easy without causing any deformation or damage. ,

In accordance with an embodiment, the spoke is according to claim 2. In this way during screwing the nipple on the spoke, the shearing stress occurring in the spoke near the nipple has a more or less constant value so that deformation and/or breaking is avoided.

In accordance with an embodiment, the spoke is according to claim 3. In this way, the tensile stress because of the tension in the spoke, has near the nipple a more or less constant value so that deformation and/or breaking is avoided.

In accordance with an embodiment, the spoke is according to claim 4. This spoke is used in a wheel with the rectangular cross-section of the spoke with its longest side parallel to the plane of the wheel, which is the position in which the reduction of drag due to the shape of the spoke is largest. For clamping the spoke the jaw of the clamp can move around the square section in the plane of the wheel, which makes the design of the clamp easy.

In accordance with an embodiment, the spoke is according to claim 5. In this way the allowable tensile stress of the shaft is increased, so that it is possible there to reduce the cross-section area when compared to the cross-section area of the first section (C) and/or the second section (A) of the spoke. The drag of the spoke when moved through ambient air is thereby reduced.

In accordance with an embodiment, the spoke is according to claim 6. In this way, the spoke can be positioned in an easy way after coupling it to the hub.

In accordance with an embodiment, the spoke is according to claim 7. In this way, stress concentration on the surface of the spoke is avoided so reducing the risk of breaking under tensile stress, shear stress or a combination of these stresses.

The invention also concerns a method in accordance with claim 8. In accordance with this method, a torque on the length of the spoke is avoided during screwing the nipple on the spoke so avoiding deformation and/or breaking of the spoke and also the occurring shear stresses are reduced due to the location where the spoke is clamped and the shape of the spoke.

The invention will be explained hereafter using an embodiment with the use of a drawing. In the drawing
Figure 1 shows a side view of a spoke according to the invention,
Figure 2 shows cross-section II-II of figure 1,
Figure 3 shows cross-section III-III of figure 1,
Figure 4 shows cross-section IV-IV of figure 1, and
Figure 5 shows cross-section V-V of figure 1.

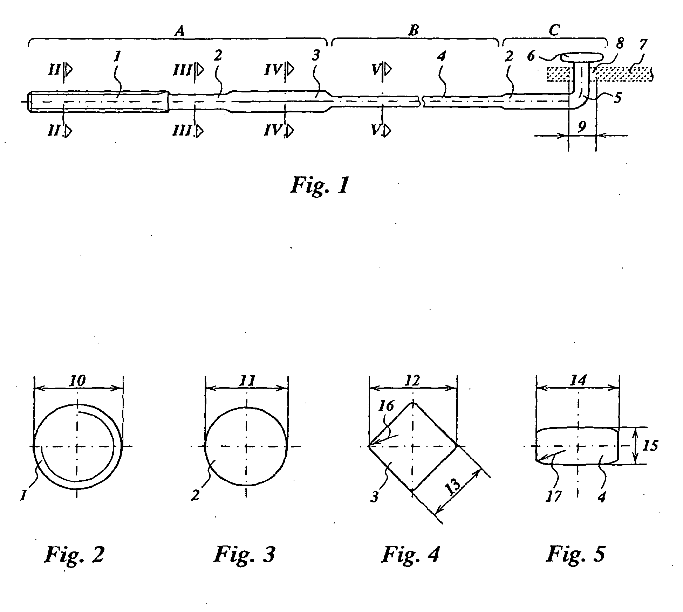

Figure 1 shows a spoke with a first end C, a second end A and between the first end C and the second end A a shaft B. The first end C hooks in a hub hole 8 that is in a hub flange 7, in figure 1 the hub is shown in interrupted lines. The spoke is made from straightened steel wire 2. For coupling the spoke using the hub hole 8 to the hub flange 7 the steel wire 2 has a bend 5 and ends in a head 6. When lacing a wheel the whole length of a spoke is inserted in the hub hole 8 and then turned over approximately 90 degrees towards a rim (not shown) surrounding the hub so that the second end A can be inserted in rim holes in the rim. The second end A has a screw thread 1 that is rolled in the straightened wire 2 whereby the outer diameter of the wire slightly increases. The length of the screw thread 1 is sufficient for screwing a nipple (not shown) on the spoke. When many or all spokes connect the hub to the rim, screwing a nipple on a spoke increases the tension in the spokes and thereby the torque required for screwing the nipple on the spoke increases. Gripping the spoke near the screw thread 1 prevents twist of the spoke because of this torque and for making the gripping of the spoke easier the spoke has a square section 3. The square section 3 is shaped such that the diagonals of the square are in the plane of the wheel and perpendicular thereto. In this way, a tool for clamping the square section 3 can move in the plane of the wheel from both sides to the square section 3 and the sides of the square can orient themselves in the jaws of the tool so that the rotative position of the spoke is adjusted directly by clamping the spoke. It will be clear that the shape of the square section can slightly deviate and for instance be diamond shaped with a top angle of up to 120 degrees. This diamond shape has the same advantages as the square shape and is considered equivalent.

Between the first end C and the second end A of the shown embodiment the spoke has a shaft B with a rectangular section 4. This rectangular section 4 reduces the drag of the spokes in a rotating wheel and therefore the rectangular section 4 is as flat as possible. As a width 14 (see figure 5) of the rectangular section 4 is approximately the same as a wire diameter 11 (see figure 3) of the wire 2, because of the requirement that the rectangular section 4 has to fit through the hub hole 8, the tension in the rectangular section 4 is higher than in the wire 2 and for this the material is reinforced through stretching. Preferably, this stretching is done previous to pressing the shaft B to a rectangular shape.

Figure 2 shows a cross-section of the spoke at the screw thread 1 with a thread outside diameter 10. This thread outside diameter 10 is half of the thread depth larger than the wire diameter 11 because of rolling the thread in the wire 2, see figure 3. In an embodiment whereby the hub hole 8 has a hole diameter 9 of 2,5 mm the wire 2 can have a wire diameter 11 of 2,0 mm and the thread outside diameter 10 can be 2,2 mm. Figure 4 shows the cross-section of the square section 3 whereby the square has a key width 13 of 1,8 mm and a diagonal 12 of 2,2 mm. The corners of the square are rounded off with a fillet 16. Figure 5 shows the cross-section of the rectangular section 4 where by the rectangle has a width 14 of 2,2 mm and a height 15 of 1,0 mm. The corners of the rectangle are rounded off with a fillet 17. In figure 5 the four sides of the rectangle are shown as flat planes, for improving the drag reduction the sides might be slightly convex or may have other shapes to obtain that object whereby the dimensions remain such that the spoke fits through the hub hole 8.

In order to prevent breaking of the spoke dimensions of the second end A are such that all the cross-section surface areas are more or less constant and that all the rotational resistance moments are more or less constant. The more or less constant surface area's ensure that the tensile stress due to the tension in the spoke does not lead to too high values of or too sudden changes in tensile stress. The more or less constant rotational resistance moments (the polar moment of inertia divided by the maximum distance from the gravity center) ensure that the shearing stress due to the torque on the nipple does not get too high values so that deformation and/or breaking of the spoke in the second end A is prevented. Herewith it is remarked that the shaft B with the rectangular section 4 has a reduced surface area and a severely reduced rotational resistance moment and although the stretching of the material has increased the allowable tensile stress the allowable shearing stress is not increased sufficiently to avoid deformation and/or breaking in a situation where the torque for screwing the nipple were to be transferred by the rectangular section 4. By ensuring that the torque is limited to the second end A and clamping the spoke at the square cross-section this breaking is prevented.

In the disclosed embodiment, the spoke has a bend 5 for hooking the spoke in an axial hole 8 in a hub, axial meaning that the centreline of the hole is in the direction of the rotation axis of the hub. The invention is also suitable to use with straight spokes without a hook that are inserted through a radial hole or a slot or are coupled in any other way to the hub. Such spokes can have a head 6 that prevents rotation of the spoke in the hub, but this is not always the case. In that situation and especially if the spoke can rotate in the hub during the screwing of the nipple on the spoke clamping the spoke is required (and) the square section 3 brings a considerable advantage.

In the disclosed embodiment the shaft B has a rectangular shape. It will be clear that a shaft with a reduced wide diameter of circular shape might also be used, for instance if a high elasticity of the spoke is seen as an advantage. For screwing on the nipple, the square section 3 is than advantageous.

In addition to the above-described production method whereby the rectangular section of a spoke is reinforced by stretching the wire to thinner diameter and then pressing it to a rectangular shape, it is possible to hammer the shaft of spoke in the desired shape. By hammering the material a reinforcing of the spoke material is also obtained.

## Claims

1. Spoke for coupling a hub to a rim of a wheel comprising a first end (C) for mounting in the hub, which first end has a head (6) for holding the spoke in the hub, a second end (A) that has a screw thread (1) on which a nipple can be screwed for holding the spoke in the rim and for tensioning the spoke, and a shaft (B) between the first end and the second end **characterized in that** near the screw thread (1) and between the screw thread (1) and the shaft (B) the spoke has a square cross-section (3).

2. Spoke according to claim 1 whereby the square cross-section (3) has a rotational resistance moment that is approximately same as a rotational resistance moment of the screw thread (1).

3. Spoke according to claim 1 or 2 whereby the square cross-section (3) has a surface area that is the approximately same as a surface area of the screw thread (1).

4. Spoke according to claim 1, 2 or 3 whereby the shaft (B) has a rectangular cross-section (4) and a diagonal of the square cross-section (3) is perpendicular to surfaces of the rectangular cross-section (4).

5. Spoke according to one of the previous claims whereby the shaft (B) has a cross-section surface area that is less than the surface area of the screw thread (1) and is reinforced by hammering or stretching in longitudinal direction.

6. Spoke according to one of the previous claims whereby the first end (C) has a bend (5) for hooking the spoke in a hub hole (8), which bend is in the plane of a diagonal of the square cross-section (3).

7. Spoke according to one of the previous claims whereby the corners of the square cross-section (3) are rounded off.

8. Method for tensioning a spoke in a wheel by turning a nipple on a screw thread of a spoke whereby a clamping tool having jaws each with rectangular intersecting planes is clamped around a part of the spoke **characterized in that** the clamping tool is clamped around a part of the spoke immediately near the screw thread that has a square cross-section.

## Patentansprüche

1. Speiche zum Kuppeln einer Nabe an eine Felge eines Rads, umfassend ein erstes Ende (C) zum Anbringen in der Nabe, wobei das erste Ende ein Kopfstück (6) zum Halten der Speiche in der Nabe aufweist, ein zweites Ende (A), das ein Gewinde (1) aufweist, auf das ein Nippel zum Halten der Speiche in der Nabe und zum Spannen der Speiche aufschraubbar ist, und einen Schaft (B) zwischen dem ersten Ende und dem zweiten Ende, **dadurch gekennzeichnet, dass** die Speiche in der Nähe des Gewindes (1) und zwischen dem Gewinde (1) und dem Schaft (B) einen viereckigen Querschnitt (3) aufweist.

2. Speiche nach Anspruch 1, wobei der viereckige Querschnitt (3) ein Drehwiderstandsmoment aufweist, das ungefähr dasselbe wie ein Drehwiderstandsmoment des Gewindes (1) ist.

3. Speiche nach einem der Ansprüche 1 oder 2, wobei der viereckige Querschnitt (3) einen Oberflächenbereich aufweist, der ungefähr derselbe wie ein Oberflächenbereich des Gewindes (1) ist.

4. Speiche nach einem der Ansprüche 1, 2 oder 3, wobei der Schaft (B) einen rechteckigen Querschnitt (4) aufweist und eine Diagonale des viereckigen Querschnitts (3) zu Flächen des rechteckigen Querschnitts (4) senkrecht steht.

5. Speiche nach einem der vorhergehenden Abschnitte, wobei der Schaft (B) einen Querschnittoberflächenbereich aufweist, der geringer als der Oberflächenbereich des Gewindes (1) ist und durch Hämmern oder Strecken in der Längsrichtung verstärkt ist.

6. Speiche nach einem der vorhergehenden Ansprüche, wobei das erste Ende (C) eine Biegung (5) zum Einhaken der Speiche in ein Nabenloch (8) aufweist, wobei sich die Biegung in der Ebene einer Diagonalen des viereckigen Querschnitts (3) befindet.

7. Speiche nach einem der vorhergehenden Ansprüche, wobei die Ecken des viereckigen Querschnitts (3) abgerundet sind.

8. Verfahren zum Anziehen einer Speiche in einem Rad durch Drehen eines Nippels auf einem Gewinde einer Speiche, wobei ein Spannwerkzeug mit Backen mit jeweils sich rechteckig kreuzenden Ebenen um ein Teil der Speiche gespannt ist, **dadurch gekennzeichnet, dass** das Spannwerkzeug um ein Teil der Speiche unmittelbar in der Nähe des Gewindes gespannt ist, das einen viereckigen Querschnitt aufweist.

## Revendications

1. Rayon pour coupler un moyeu à une jante d'une roue comprenant une première extrémité (C) destinée à être montée dans le moyeu, laquelle première extrémité a une tête (6) pour maintenir le rayon dans le moyeu, une seconde extrémité (A) qui a un filetage de vis (1) sur laquelle un manchon fileté peut être vissé pour maintenir le rayon dans la jante et pour tendre le rayon, et un arbre (B) entre la première extrémité et la seconde extrémité, **caractérisé en ce qu'**à proximité du filetage de vis (1) et entre le filetage de vis (1) et l'arbre (B), le rayon a une section transversale carrée (3).

2. Rayon selon la revendication 1, dont la section transversale carrée (3) a un moment de résistance à la rotation qui est approximativement identique à un moment de résistance à la rotation du filetage de vis (1).

3. Rayon selon la revendication 1 ou 2, dont la section transversale carrée (3) a une surface qui est approximativement la même qu'une surface du filetage de vis (1).

4. Rayon selon la revendication 1, 2 ou 3, dont l'arbre (B) a une section transversale rectangulaire (4) et une diagonale de la section transversale carrée (3) est perpendiculaire aux surfaces de la section transversale rectangulaire (4).

5. Rayon selon l'une des revendications précédentes, dont l'arbre (B) a une surface de section transversale qui est inférieure à la surface du filetage de vis (1) et est renforcé par martelage ou étirement dans la direction longitudinale.

6. Rayon selon l'une des revendications précédentes, dont la première extrémité (C) a une courbure (5) pour crocheter le rayon dans un trou de moyeu (8), laquelle courbure est dans le plan d'une diagonale de la section transversale carrée (3).

7. Rayon selon l'une des revendications précédentes, dont les coins de la section transversale carrée (3) sont arrondis.

8. Procédé pour tendre un rayon dans une roue en entraînant en rotation un manchon fileté sur un filetage de vis d'un rayon dans lequel un outil de serrage ayant des mâchoires chacune avec des plans d'intersection rectangulaires, est serré sur une partie du rayon, **caractérisé en ce que** l'outil de serrage est serré sur une partie du rayon immédiatement à proximité du filetage de vis qui a une section transversale carrée.
